# EUROPEAN PATENT APPLICATION

(11) **EP 1 826 945 A1**
(43) Date of publication of application: **29.08.2007**
(21) Application number: 06425107.7
(22) Date of filing: 22.02.2006
(51) Int. Cl.: H04L 12/24

(54) **Missing trap recovery in an SNMP/UDP managed network**

(71) Applicant: Siemens S.p.A., Milano (IT)
(72) Inventor: Bernini, Massimo, Dr., 20065 Inzago (MI) (IT); Frassetto, Michele, Dr., 20064 Gorgonzola (MI) (IT); Gardelli, Elisabetta, Dr., 20127 Milano (IT)
(74) Representative: Giustini, Delio

(57) **Abstract**

A manager (22, 22a) in an Element Management System (21) builds a model of the state of a supervised Network Element (11) by exploiting traps transmitted by an agent (12, 12a) in the supervised element (11). Upon detecting (101, 111, 113) a lack of alignment between the model and the current state of the element (11), the manager asks (104) the agent to re-delivery the traps necessary to get again the alignment. Traps arriving at the manager while it is processing re-delivered traps are buffered in the manager itself (105, 106) and are processed at the end of the re-alignment (107, 108).

## Description

### Field of the invention

The present invention refers to communication system management, and more particularly it concerns a method of and device for missing trap recovery and manager-agent realignment in an SNMP/UDP (Simple Network Management Protocol/User Datagram Protocol) managed network.

### Background of the Invention

Communication networks are associated with network management systems that supervise and control the operations of the network. In a typical network management system, the supervised network elements are provided with means (the "agent") that monitor and accumulate operational data and detect certain events. In turn, the management system elements include means (the "manager") that request operational data or receive event notifications from the agents and react accordingly.

A commonly used management protocol is the Simple Network Management Protocol (SNMP). SNMP, which is standardised by IETF (Internet Engineering Task Force), specifies the use of UDP datagrams as the communication protocol to be used for sending the so called "traps": Traps are spontaneous notifications transmitted from an agent to the manager for communicating certain events occurring in the associated device, e.g. an alarm situation or a configuration change. By using such traps, the manager builds and maintains a model of the supervised device.

The SNMP protocol does not provide for an acknowledgement of received traps, and UDP is a connection-less protocol which does not detect and manage the loss of carried messages. So, there is the possibility that some traps are not received by the manager, with the risk of misalignment between the management system and the network elements: in other words, if a trap is lost, the manager has a wrong internal modelling of the supervised device(s).

To allow an easy detection of missing traps at the manager, the traps originating from a network element are associated with a serial number. A missing trap is thus detectable from discontinuities in the trap number sequence. Should the loss of one or more traps be detected, the network management system starts a recovery procedure in order to get again the missing information. This is possible in that the agent keeps track, in the so-called "event log", of the events having generated the trap emission and hence of the traps having been sent. The recovery procedure can be based on a polling mechanism, by which the manager system asks the network element re-transmission of the concerned trap(s), as disclosed for instance in EP-A 1 102 433 and US-A 6.292.472.

Re-establishing the alignment between the current device state and the model in the manager is of course necessary also when the manager connects for the first time or reconnects to the device.

However, during the recovery procedure, it may happen that the situation at the device changes again, with consequent emission of new traps, so that, at the end of the recovery process, the manager has not yet an aligned or consistent model of the managed device. The above mentioned documents do not deal with the problem of handling traps generated during the recovery process.

A trap recovery method dealing with that problem and ensuring a final consistency between the manager and the agent is disclosed in the document "Cisco WAN Manager SNMP Service Agent Guide", document http://www.cisco.com/en/US/ products/sw/netmgitsw/ps2340/products technical reference book 09186a008026f577. html.

The document discloses a realignment procedure by which the SNMP manager can retrieve missing traps one at a time. Whenever the manager discovers an out-of-sequence trap number, it discards any traps coming from the agent subsequently to and including the out-of-sequence one, makes the agent stop sending any more traps to the manager and requests the first missing trap to the agent. The agent re-transmits the first missing trap and informs the manager of the number of subsequent traps to be retransmitted. If subsequent traps exist, the agent re-transmits them one by one. During such retransmission, new traps are buffered in an agent's buffer. Once all queued traps have been retransmitted, the real time trap delivering by the agent is enabled again by the manager.

The above recovery procedure has a number of drawbacks.
- it is managed partly by the manager (trap loss detection and trap discarding) and partly by the agent (blocking trap delivery and trap buffering), and this entails that each agent is provided with a corresponding part of the recovery management logic. Since the number of the agents is high, this results in increased costs of the system;
- in case of multi-manager solutions, problems exist in dealing with the fact that the loss of traps generally does not affect, or does not affect to the same extent, all managers controlling a single device. Actually under such situation the agent either is to differently manage trap delivery to different managers, by buffering new traps directed to the manager(s) involved in the recovery procedure while continuing real-time delivering to the other managers, or is to stop delivery to all managers: the first solution is complex to be managed, while the second solution entails a waste of resources and a delay in the trap processing for managers not affected by the losses;
- buffering the traps at the agent makes loss of data possible, since the agent buffers cannot have great sizes, and the buffer size can be readily exceeded.
- a further waste of resources is due to the discarding of all traps subsequent to the loss detection, since such traps are to be retransmitted.

### Summary of the Invention

Thus, it is an object of the present invention to provide a way of efficiently managing the realignment of the management system to the managed device state, at the connection or reconnection or when a notification loss is detected.

The invention provides, in a first aspect, a method of aligning, in a manager associated with a controlling element in an SNMP managed system, a model of a supervised device with a current state of the device. An agent associated with the device notifies events implying a change of state of the device to said manager through spontaneous notifications and keeps a record of said events, and said manager, upon detecting a lack of alignment, whereby it lacks information about certain events, polls the agent for re-delivery of notifications containing the missing information. The method comprises the steps of buffering at the manager, while the latter is getting and processing notifications being re-delivered by the agent, any new notification generated in real time by the agent, and of processing the buffered notifications at the end of the processing of the re-delivered ones.

Buffering of the re-delivered notifications takes place according to a FIFO rule: this, in association with an incremental filling of an event log table from which the re-delivered notifications are taken, prevents any mismatch in case of a buffered notification entailing a change in the situation being updated.

Advantageously, in case multiple notifications are to be re-delivered, re-delivery takes place by using the GET-BULK procedure.

In a second aspect of the invention, there is provided a manager arranged to implement the method. The manager comprises a trap recovery module comprising buffer means for temporary storing traps generated in real time by the agent while the manager is getting and processing traps being re-delivered by the agent, and routing means for directing traps arriving from the agent either to trap processing means or to the buffer and for enabling or disabling forwarding of the buffer content to the processing means, depending on an operation phase.

### Brief description of the drawings

Further objects, characteristics and advantages of the invention will become apparent from the following description of preferred embodiments, given by way of non-limiting example and illustrated in the accompanying drawings, in which:
- Fig. 1 is a schematic block diagram of an SNMP managed communication system in which the invention is employed;
- Figs. 2 to 4 are schematic diagrams illustrating normal trap delivery, recovery of lost traps and processing of traps buffered during recovery, respectively; and
- Fig. 5 is a flow chart of the method of the invention.

### Description of the preferred embodiments

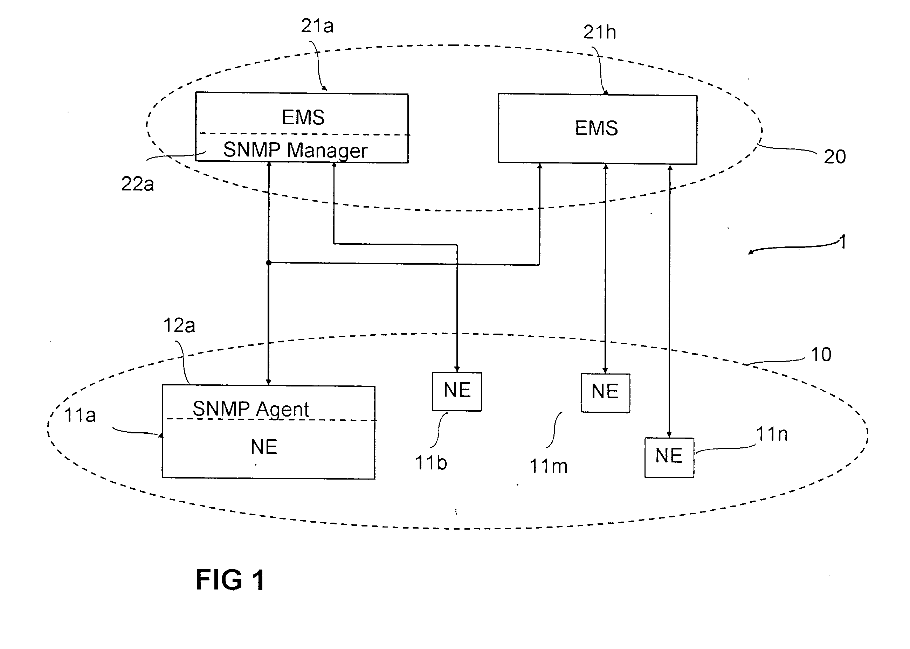

Referring to Fig. 1, there is shown a communication system 1 made up of a communication network 10 and a management network 20. Communication network 10 includes network elements (NE) 11a, 11b...11m...11n, and management network includes Element Management Systems (EMS) 21a...21h, whose number is typically far lower than that of NE's 11. Each EMS 21a...21h generally supervises a number of network elements 11, and a network element, e.g. element 11a, may be supervised by multiple EMS's 21.

Communication between NE's 11 in network 10 and EMS's 21 in network 20 takes place via the SNMP/UDP protocol, in particular SNMPᵥ₂/UDP protocol. As known, in an SNMP management framework, on-board processing means ("agent") are provided in network elements 11 to monitor and accumulate operational data and to detect exceptional events. In turn, the element management systems 21 include processing means ("manager") at the application level that request operational data or receive event notifications from the agent and react accordingly. The agent is shown at 12a for NE 11a and the manager is shown at 22a for EMS 21a. The EMS's also send command requests to the supervised NE's, and the NE's are to send responses to such command requests. In this way, an EMS maintains the control on the working state of an NE and on the quality of network transmission.

In summary, an EMS 21, as far as the present invention is concerned, performs the following operations:
- shows and stores data related to alarm situation;
- shows and stores performance monitoring measurements;
- shows and stores inventory data related to physical slaves;
- provides an interface to read and change configuration parameters.

The nature of the communication network and of NE's 11 is not of interest for the understanding of the invention. Of course, NE's 11 must have the processing capabilities required for performing the tasks required of an NE by the SNMP.

Hereinafter, for sake of simplicity, reference will be made to the supervision of a single agent like 12a by a single manager like 22a.

In the above scenario, manager 22a expects that all changes (alarms, configuration changes...) that occur in a device are notified by agent 12a by traps.

The agent will keep a record (event log) of all events occurred, as shown in table 1 below.

**Table 1**

| Event_ID | Event description |
|---|---|
| 1 | event_1 |
| 2 | event_2 |
| 3 | event_3 |
| 4 | event_4 |
| ... | .... |
| m | event_m |

The event log table is stored by agent 12a into a proprietary table of the SNMP Management Information Base (MIB). The table is written at progressively increasing row addresses, as shown, and the row address (or row number) at which an event is stored is used as a trap serial number when a trap is generated. Thus, it is essential that the position of the events in the event log table is never modified (that is, no cancellation of entries and consequent re-compaction of the table takes place), in order the alignment procedure can be performed correctly.

Agent 12a will also store a picture of the current status of the device, e.g. by means of tables (e.g. for the active alarms), graphical representations (e.g. for the device configuration), etc.

Manager 22a, upon receiving and processing the traps, will build a model of the supervised NE 11, which model is to be kept constantly aligned with the current state of the device, i.e. with the picture in agent 12a. In order the alignment can be maintained, manager 22a must keep track of the received traps.

Whenever a lack of alignment is detected, manager 22a has to ask information about the event table content ("polling") to agent 12a. For realignment, two cases can occur, namely:
- partial realignment: manager 22a asks entries in the range Even_ID_{low} - Event_ID_{high}, which contains one or more records; this situation can occur because of the loss of one or more traps (if multiple traps have been lost, these are consecutive) while EMS 21a and NE 11a are connected, or because of a temporary interruption of the connection;
- a complete alignment: this occurs at the first connection, when manager 22a is to request the whole content of the event table to agent 12a to build the model.

The realignment process can take some time, and in the meanwhile events requiring transmission of new traps to manager 22a can occur in NE 11a.

If new traps are received at manager 22a during the realignment process, according to the invention those traps are buffered according to a FIFO rule in the manager and processed at the end of realignment process. This ensures that the device model in the manager will be aligned to the device status. A one-to-one correspondence between the serial number of the trap and the row number in the event log table always exists and there is no risk that the request for lost traps by the manager results in the re-delivery of a wrong trap. Those new traps could even potentially contain changes in the situation being re-built by the realignment process, but, thanks to the incremental event table filling and the FIFO buffering of newly arrived notifications at the manager, no mismatch occurs. Indeed, if a new notification relates to an entry to be modified e.g. in an active alarm table, after the whole active alarm situation has been rebuilt (with the entry not yet modified), the modification will be detected parsing the notifications buffered and will be performed.

In this way there is no loss of information and no mismatch due to the fact that SNMP records on the device can change during the reading process.

Request of several missing traps or of the whole event table content by the manager is performed by means of one or more GET-BULK operations, and delivery (or re-delivery) of the corresponding traps is performed by the agent in response to the GET command(s) generated by the manager. As known, a GET-BULK operation is a standard-defined macro-get operation, which allows the manager to get several table entries at a time. Use of macro-get operations results in a manager's control on the re-delivery and a faster realignment process that in the prior art, where the table entries are to be individually re-delivered.

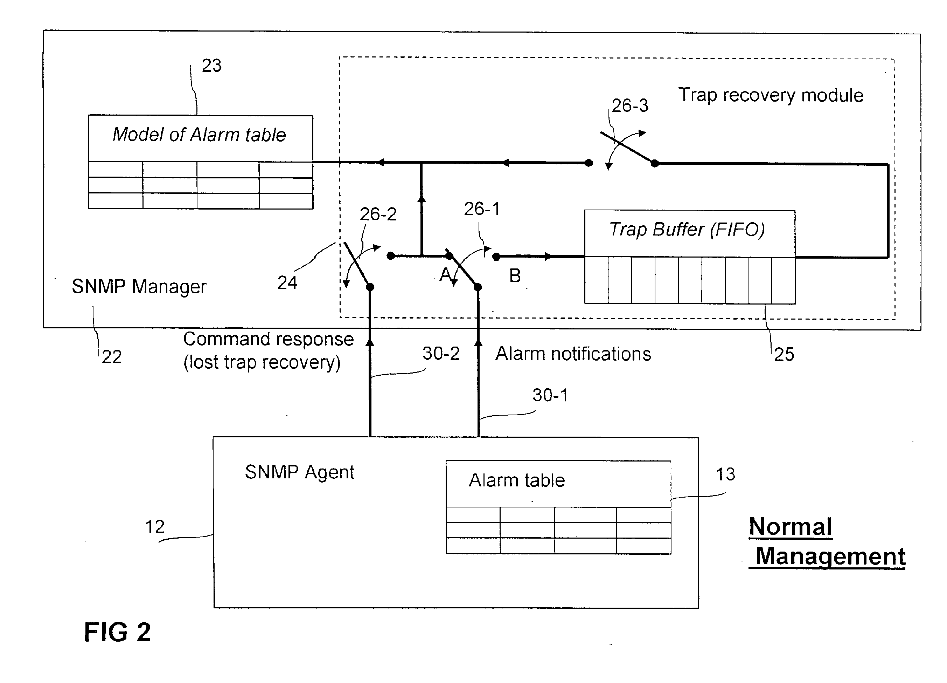

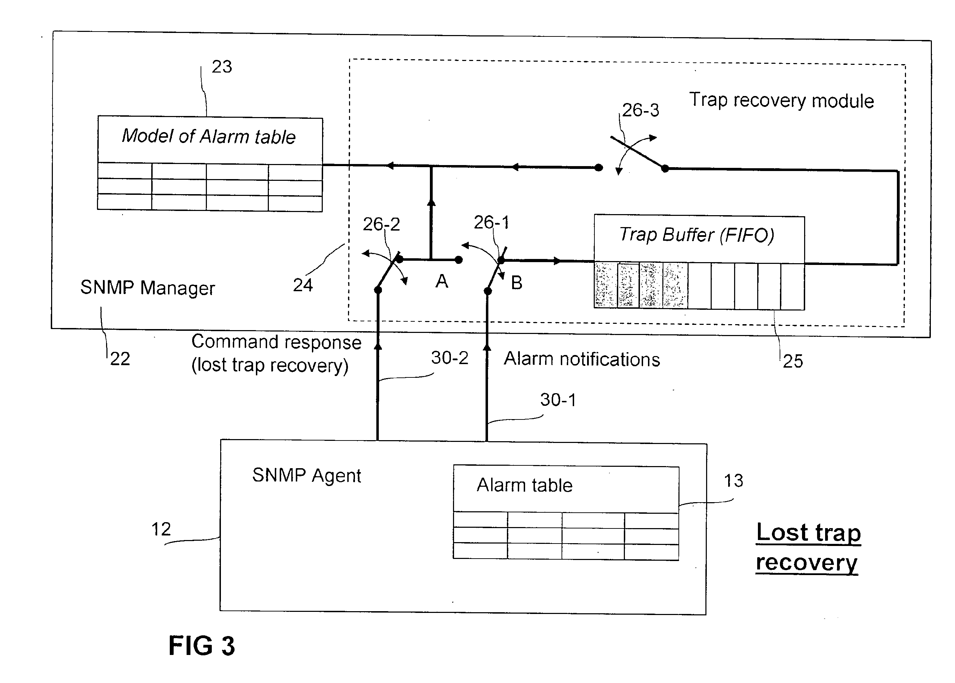

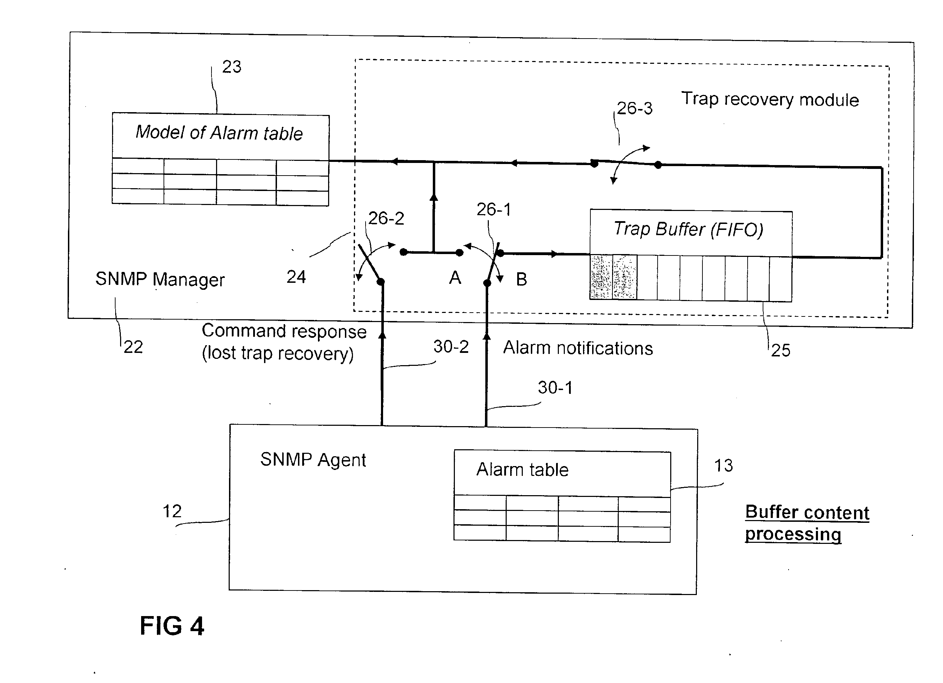

Figs. 2 to 4 are diagrams explaining the information flow between the entities in an agent 12 and a manager 22, in case of a normal management situation, while agent 12 and manager 22 are aligned (Fig. 2), and during the re-alignment process (Figs. 3, 4). In such Figures, the elements already discussed in connection with Fig. 1 are denoted by the same reference numerals. The trap generation logic in agent 12 and the trap processing logic in manager 22, including a missing trap detection logic, are not explicitly indicated. For this description, it is assumed that the traps only concern alarms, and the Figures show alarm tables 13, 23 as the elements to be kept aligned in agent 12 and manager 22. It is to be remembered, however, that recovery of missing information in case of lack of alignment between tables 13 and 23 entails reading the event log table in the agent and not the contents of an active alarm table.

According to the invention, manager 22 is further equipped with a trap recovery module 24 including a FIFO buffer 25 for temporary storage of real-time generated alarm notifications incoming during the recovery procedure. For sake of an easier understanding of the operation of the invention, separate paths 30-1, 30-2 have been indicated between agent 12 and manager 22 for the real-time generated alarm notifications and the "lost" alarm notifications re-delivered to manager 22. Moreover, recovery module 24 is shown as equipped with routing means, schematised by switches 26-1, 26-2, 26-3, for directing the alarm notifications arriving at manager 22 to table 23 or buffer 25 and then from buffer 25 to table 23, as required by the particular operation phase.

Fig. 2 shows the "normal management" situation, in which alarm notifications are being properly received by manager 22 and the alarm situation modelled in table 23 is consistent with that in table 13. As long as such a situation lasts, switch 26-1 is in position A, where it connects path 30-1 so as to forward real-time alarm notifications to table 23. Switches 26-2 and 26-3 are open, since no alarm notification re-delivery is in progress and no buffering of real-time generated alarm notifications is therefore necessary.

Fig. 3 shows the situation during the first part of the recovery phase, namely the processing of re-delivered traps by manager 22. This configuration is taken as soon as manager 22 has recognised that one or more traps have not arrived. Accordingly, manager 22 requests the missing traps to agent 12 via GET BULK commands and switches switch 26-1 to position B, in order to transfer to buffer 25 also the out-of-sequence trap having permitted the detection of missing traps, as well as traps generated while missing trap recovery is in progress. Switch 26-2 is closed, so that agent 12 can respond to the GET-BULK commands and the re-delivered traps can be forwarded to table 23. Switch 26-3 is open, so that the traps temporarily stored in buffer 25 cannot be forwarded to table 23 and no out-of-sequence updating can take place.

The configuration shown in Fig. 3 is also taken at the first connection between a manager and an agent, as well at a reconnection after a possible break in the connection, if the manager detects that some traps have been generated while the connection was off.

Figure 4 shows the situation during the second part of recovery phase, in which the content of buffer 25 is read. Re-delivery of missing traps has ended and switch 26-2 is again open. Switch 26-3 is closed to allow forwarding the buffered traps to table 23. The buffer, as said, has a FIFO organisation, so that processing of buffered traps by manager 22 follows the exact sequence in which the traps had been generated by the agent. Switch 26-1 is still in position B, whereby newly generated traps can arrive at buffer 25 and be queued therein. After all traps in buffer 25 have been processed, the situation of Figure 2 is resumed.

The skilled in the art has no difficulty in applying the above description to the general case of traps relevant to different kinds of events.

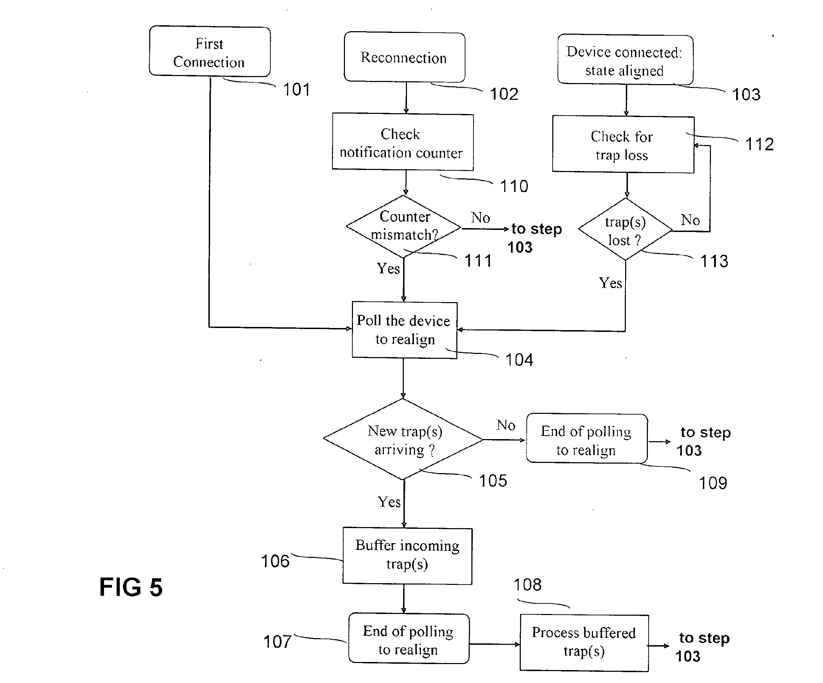

Fig. 5 is a flow chart of the process for keeping the EMS model of the device aligned with the device state. Three different starting conditions are possible:
- first connection of EMS to NE (step 101);
- reconnection of EMS to NE (step 102);
- EMS is connected to NE and aligned therewith (step 103).

In the first case, manager 22 must get the whole alarm table from agent 12. The process passes to step 104 in which manager 22 polls agent 12 for becoming aligned. As said, to this end, manager 22 sends GET-BULK commands to agent 12, which replies to said commands by transmitting the contents of the event log table. During alignment, manager 22 checks whether new real-time generated traps are arriving (step 105). In the affirmative, the incoming trap(s) is (are) buffered (step 106) and, when the alignment is terminated (step 107), the buffered traps are processed (step 108). At the end of processing of the buffered traps, manager 22 and agent 12 are aligned and the process goes to step 103.

If no trap has arrived during alignment (output NO of step 105), when the alignment is terminated (step 109) the process goes directly to step 103.

In case of reconnection, manager 22 checks (step 110, "Check notification counter") whether some trap has been generated while the device was not connected. To this end, manager 22 e.g. asks the serial number of the last transmitted trap to the agent and compares it with the serial number of the last trap received. If there is a mismatch (output YES of step 111) the process goes to step 104 to request the missing traps and proceeds as disclosed above for the first connection. If there is no mismatch (output NO of step 111), the process directly goes to step 103.

During normal management, i.e. when the initial condition is that shown at step 103, manager 22 continuously monitors the serial number of the arriving traps for detecting whether some trap has been lost (steps 112, 113). As long as no trap is lost (output NO of step 113), the process cycles trough steps 112 and 113. When a trap loss is detected (output YES of step 113), the polling procedure is started (step 104), and the steps already described for the first connection and the reconnection are performed.

Thus, at the end of the process, a consistent final situation is achieved between the model and the device, while keeping the traffic required to recover the information missing due to lost traps at a minimum, since no received trap is to be discarded and subsequently got again. Consecutive missing traps are recovered in an efficient way, by collecting them with macro-get operations. Moreover, the procedure is completely manager-driven, and this has the following advantages:
- manager 22 can manage recovery of lost traps by properly scheduling the tasks;
- in a multi-manager configuration, the possible loss of different sets of traps by different managers connected to a same agent is handled in simple and effective way. The disclosed procedure causes re-delivery of lost traps having actually experienced a loss: there is no need to send all traps to all managers connected, thus avoiding delays and band waste, nor to buffer at the agent different trap sets for the different managers;
- the buffers at the managers can be made greater than buffers at the individual agents, and this avoids or strongly reduces the risk of data losses.

It is evident that the above description has been given by way of non-limiting example and that changes and modifications are possible without departing from the scope of the invention. In particular, even if the invention has been discussed in detail with reference to a connection between an EMS and an NE, it can be applied whenever a management-agent structure exist that provides for trap transmission by an agent to a manager: for instance, the procedure can be applied within a two-layer management network, like that disclosed in EP-A 1 102 433, where the EMS's form the lower management layer and send traps to a manager in a network management system (NMS) belonging to the upper managing layer.

## Claims

1. A method of aligning, in a manager (22, 22a) associated with a controlling element (21a...21h) in a Simple Network Management Protocol managed system (1, 10, 20), a model of the state of a supervised device (11a...11n) with a current state of the device (11a...11n), wherein said model is created by said manager (22, 22a) by processing traps transmitted by an agent (12, 12a) associated with the supervised device (11a...11n) to notify certain events, and wherein said manager (22, 22a), upon detecting a lack of alignment between the model and the current state of the device (11a...11n), whereby it lacks information about certain events, asks the agent (12, 12a) re-delivery of traps containing the missing information, the method being **characterised in that** it comprises the steps of:
- buffering at said manager (22, 22a), while the latter is getting and processing traps re-delivered by the agent (12, 12a), any new trap generated in real time by the agent (12, 12a); and
- reading and processing the buffered traps at the end of the processing of the re-delivered ones.

2. The method as claimed in claim 1, **characterised in that** said buffering occurs according to a FIFO rule.

3. The method according to claim 1 or 2, **characterised in that** it is performed whenever a connection is set up, or is set up again, between an agent (12, 12a) and a manager (22, 22a), or whenever the loss of one or more consecutive traps is detected while the manager (22, 22a) and the agent (12, 12a) are connected.

4. The method as claimed in claim 3, wherein said buffering step includes also buffering the trap having enabled detection of said loss.

5. The method as claimed in any preceding claim, **characterised in that** re-delivery of multiple traps is controlled by the manager (22, 22a) through one or more GET-BULK operations.

6. A manager (22, 22a) in a manager-agent structure belonging to a network management system (10, 20) operating according to the Simple Network Management Protocol, wherein said manager (22, 22a) includes processing means for building and updating a model of the state of a supervised device (11a...11n) by processing traps transmitted by an agent (12, 12a) associated with the device (11a...11n), said processing means being arranged to detect a lack of alignment between the model and the current state of the device (11a...11n) and to poll the agent (11a...11n) for re-delivery of traps containing the information necessary for getting again the alignment, the manager (22, 22a) being **characterised in that** it comprises a trap recovery module (24) comprising:
- buffer means (25) for temporary storing traps generated in real time by the agent (12, 12a) while the manager (22, 22a) is getting and processing traps being re-delivered by the agent (12, 12a); and
- routing means (26-1, 26-2, 26-3) for directing traps arriving from the agent either to the trap processing means or to the buffer (25) and for enabling or disabling forwarding of the buffer content to the processing means, depending on an operation phase.

7. The manager as claimed in claim 6, wherein said trap recovery module (24) is arranged to operate according to:
- a first operation phase, in which the traps are properly being received at the manager (22, 22a) and in which said routing means (26-1, 26-2, 26-3) are set in a first routing configuration such that they forward the traps directly to the processing means;
- a second operation phase, in which the manager (22, 22a) is processing traps re-delivered by an agent (12, 12a), and in which said routing means (26-1, 26-2, 26-3) are set in a second routing configuration such that they forward the re-delivered traps directly to the processing means and forward traps generated in real time by the agent (12, 12a) to said buffer (25);
- a third operation phase, in which the manager (22, 22a) has ended processing traps re-delivered by an agent (12, 12a) and in which said routing means (26-1, 26-2, 26-3) are set in a third routing configuration such that they forward the buffered traps to the processing means and forward to said buffer (25) traps generated in real time while the buffer is being read.

8. A device as claimed in claim 6 or 7, wherein said buffer is a FIFO buffer.

9. A device as claimed in claims 7 or 8, wherein said routing means (26-1, 26-2, 26-3) are set to said second configuration upon detection of the non-arrival of a trap, so as to forward to said buffer (25) also the trap having allowed such detection.
